# EUROPEAN PATENT APPLICATION

(11) **EP 4 685 916 A1**
(43) Date of publication of application: **28.01.2026**
(21) Application number: 24190237.8
(22) Date of filing: 23.07.2024
(51) Int. Cl.: H01M 10/42, B60L 3/00, B60L 50/64, H01M 10/48, H01M 50/249, H01M 50/30

(54) **A BATTERY MONITORING SYSTEM**

(71) Applicant: Volvo Construction Equipment AB, 631 85 Eskilstuna (SE)
(72) Inventor: SELANDER, Alexander, 362 98 Älmeboda (SE); TIGER, Daniel, 360 51 Hovmantorp (SE); KVIST, Roland, 360 42 Braås (SE)
(74) Representative: Ström & Gulliksson AB

(57) **Abstract**

The present disclosure relates to a battery monitoring system for a vehicle, comprising a battery having one or more cells, a housing wherein the battery is arranged, the housing has an atmosphere, wherein a ventilation valve is arranged at the housing for controlling the atmosphere in the housing, the ventilation valve comprises a first port and a second port, the first port being in fluid communication with the housing, the second port is in fluid communication with a closed expansion space arranged outside the housing, wherein a gas sensor is arranged at the atmosphere, at the ventilation valve, and/or at the closed expansion space, the gas sensor is configured to detect a gas leaking or emitting from the battery.

## Description

### TECHNICAL FIELD

The disclosure relates generally to electric vehicles. In particular aspects, the disclosure relates to a battery monitoring system for a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

As battery technology continues to evolve, particularly with the widespread adoption of lithium-ion batteries, ensuring the safety and longevity of these power sources has become a paramount concern. Lithium-ion batteries are known for their high energy density, which makes them ideal for various applications such as to electric vehicles. However, this high energy density also brings with it significant risks, including the potential for thermal runaway - a chain reaction where an increase in temperature leads to further temperature increases, often resulting in fires or explosions.

There is a need for a battery monitoring system for monitoring the health of the battery during operation and use as well as charging so that the risk for a thermal runaway, for instance, may be minimized.

### SUMMARY

According to a first aspect of the disclosure, a battery monitoring system for a vehicle, comprising a battery having one or more cells, a housing wherein the battery is arranged, the housing has an atmosphere, wherein a ventilation valve is arranged at the housing for controlling the atmosphere in the housing, the ventilation valve comprises a first port and a second port, the first port being in fluid communication with the housing, the second port is in fluid communication with a closed expansion space arranged outside the housing, wherein a gas sensor is arranged at the atmosphere, at the ventilation valve, and/or at the closed expansion space, the gas sensor is configured to detect a gas leaking or emitting from the battery. The first aspect of the disclosure may seek to detect early warning signs of battery failure battery failure. A technical benefit may include enabling early and accurate detection of thermal runaway and other battery health issues by monitoring gas emissions within the atmosphere. In addition, the closed expansion space ensure that it is a substantially closed atmosphere surrounding the battery whereby detection of gasses may be facilitated while it is still possible for the atmosphere surrounding the battery to "breathe" into and from the closed expansion space.

Optionally in some examples, including in at least one preferred example, a plurality of gas sensors are arranged. A technical benefit may include providing redundancy and improved accuracy in gas detection.

Optionally in some examples, including in at least one preferred example, the plurality of gas sensors is configured to detect different gasses and/or quantities of the gasses. A technical benefit may include enabling comprehensive monitoring of various gas emissions, enhancing early detection of battery issues.

Optionally in some examples, including in at least one preferred example, the gas sensor is configured to continuously detect a gas or the gas sensor is configured to detect a gas within predetermined intervals. A technical benefit may include allowing for real-time monitoring or periodic checks to conserve power while maintaining safety.

Optionally in some examples, including in at least one preferred example, the gas sensor is configured to detect a gradient or increase in gas content around the battery. A technical benefit may include enabling the detection of trends or sudden changes in gas emissions, which can indicate the onset of thermal runaway.

Optionally in some examples, including in at least one preferred example, further comprising a control unit. A technical benefit may include centralizing data processing and control, improving system integration and response.

Optionally in some examples, including in at least one preferred example, the control unit is operatively connected with the gas sensor. A technical benefit may include facilitating immediate data transfer and processing for rapid response.

Optionally in some examples, including in at least one preferred example, the control unit is configured to receive detection data from the one or more gas sensors. A technical benefit may include enabling the aggregation and analysis of data from multiple sensors, enhancing diagnostic accuracy.

Optionally in some examples, including in at least one preferred example, the control unit, based on the received detection data, is configured to compare the detection data with a predetermined gas content value. A technical benefit may include providing a benchmark for identifying abnormal gas levels, improving fault detection.

Optionally in some examples, including in at least one preferred example, the control unit is configured to detect if a gradient of the detected gas or an increase of the detected gas content exceeds a predetermined level within a predetermined time period. A technical benefit may include providing early warning of rapid changes in gas emissions, allowing for timely intervention.

Optionally in some examples, including in at least one preferred example, the control unit is configured to initiate a warning process if the detected gas content exceeds the predetermined gas content. A technical benefit may include ensuring immediate action is taken to prevent battery failure or safety hazards.

Optionally in some examples, including in at least one preferred example, the control unit is operatively connected with other vehicle components, and that the control unit is configured to receive data from these components so that the control unit can monitor the detected gas content in view of vehicle data received from the other vehicle components. A technical benefit may include integrating battery monitoring with overall vehicle and/or environmental monitoring for thereby enhancing the robustness of the system as well as predicting the health of the battery during different use cases of the vehicle during different environmental circumstances.

According to a second aspect of the disclosure, a central battery health prediction system comprising a central control unit connected with one or more battery monitoring systems as described. The second aspect of the disclosure may seek to seek to detect early warning signs of battery failure battery failure. A technical benefit may include enabling early and accurate detection of thermal runaway and other battery health issues by monitoring gas emissions within the atmosphere so that this may be communicated to an operator of a vehicle.

According to a third aspect of the disclosure, a vehicle comprising the battery monitoring system as described. The third aspect of the disclosure may seek to seek to detect early warning signs of battery failure.

According to a fourth aspect of the disclosure, a method for monitoring a battery of a battery monitoring system as described, comprising
arranging a battery having one or more cells in a housing, the housing has an atmosphere, arranging a ventilation valve at the housing for controlling the atmosphere in the housing, the ventilation valve comprises a first port and a second port, the first port being in fluid communication with the housing, the second port is in fluid communication with a closed expansion space arranged outside the housing,
arranging a gas sensor at the atmosphere, at the ventilation valve, and/or at the closed expansion space,
detecting a gas leaking or emitting from the battery via the gas sensor. The forth aspect of the disclosure may seek to seek to detect early warning signs of battery failure battery failure. A technical benefit may include enabling early and accurate detection of thermal runaway and other battery health issues by monitoring gas emissions within the atmosphere.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary battery monitoring system according to an example.
**FIG. 2** is another exemplary battery monitoring system according to an example.
**FIG. 3** is an exemplary vehicle according to an example.
**FIG. 4** is an exemplary central battery health prediction system according to an example.
**FIG. 5** is an exemplary method for monitoring a battery of a battery monitoring system according to an example.
**FIG. 6** is an exemplary method for initiating a warning process if the detected gas content exceeds the predetermined gas content according to an example.
**FIG. 7** is another view of **FIG. 1****,** according to an example.
**FIG. 8** is an exemplary vehicle battery system according to an example.

### DETAILED DESCRIPTION

The detailed description set forth below provides information and examples of the disclosed technology with sufficient detail to enable those skilled in the art to practice the disclosure.

Traditionally, battery monitoring systems have focused on internal metrics such as voltage, current, and temperature. While these parameters are crucial, they often fail to provide early warning signs of catastrophic failures like thermal runaway. For example, internal short circuits or external damage can lead to rapid degradation that internal sensors may not detect until it is too late. In addition a battery may also be mechanical abused which also may lead to failure of the battery and that it may be less healthy.

Many systems are designed to monitor a specific set of parameters, often neglecting the comprehensive monitoring of gas emissions. This limited scope can result in missed early warning signs of battery failure.

The present disclosure is providing a battery monitoring system detecting gas emissions so that the system may respond effectively on variation in gas content. Furthermore, by the system according to the disclosure external environmental factors such as temperature fluctuations, humidity, and airborne contaminants which can interfere with the accuracy of gas sensors are avoided. Hence, the present system is able to adequately compensate for these variables, thereby minimizing the potential false positives or negatives detections.

A more robust and comprehensive battery monitoring solution is obtained which may provide early and accurate detection of thermal runaway and other failure modes, enabling timely intervention to prevent catastrophic outcomes. By addressing these challenges, the battery monitoring system according to the disclosure may significantly enhance the safety, reliability, and longevity of batteries across various applications and use cases.

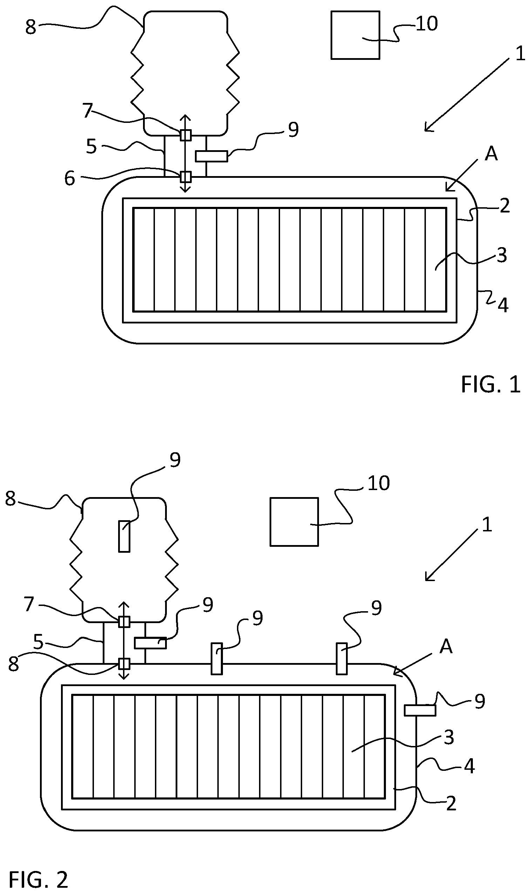

**FIG. 1** is an exemplary battery monitoring system **1** according to an example. The battery monitoring system **1** is configured to be applied for a vehicle. The battery monitoring system **1** comprises a battery having one or more cells **3.** The battery **2** is arranged within a housing **4,** the housing **4** has an atmosphere **A.** A ventilation valve **5** is arranged at the housing **4** for controlling the atmosphere **A** in the housing **4,** the ventilation valve **5** comprises a first port **6** and a second port **7,** the first port **6** being in fluid communication with the housing **4** and the atmosphere **A,** the second port **7** is in fluid communication with a closed expansion space **8** arranged outside the housing **4.** A gas sensor **9** is arranged at the ventilation valve **6** for detecting a gas leaking or emitting from the battery **2.** In another example, the gas sensor **9** may be arranged at the atmosphere **A** in the housing **4,** at the ventilation valve **5,** and/or at the closed expansion space **8.** In all arrangements of the gas sensor **9** it is ensured that it detects a gas leaking or emitting from the battery.

The battery monitoring system **1** further comprising a control unit **10.** The control unit **10** is operatively connected with the gas sensor **9.** The control unit **10** may include a microprocessor, microcontroller, programmable digital signal processor or another programmable device. The control unit **10** may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

A plurality of gas sensors **9** may be arranged within the system **1** for detecting gas leaking or emitting from the battery. In **FIG. 2****,** gas sensors **9** are arranged at the atmosphere **A** in the housing, at the ventilation valve **5** and at the closed expansion space **8.** A plurality of sensors **9** may be arranged and be distributed throughout the system for proving both redundancy and improved accuracy in gas detection. The plurality of gas sensors may be configured to detect different gasses and/or quantities of the gasses so that comprehensive monitoring of various gas emissions, enhancing early detection of battery issues.

The gas sensor(s) **9** may be configured to detect any of the following gases: water steam, Carbon monoxide, Carbon dioxide, Hydrogen, methane, ethane, oxygen, nitrogen oxides, volatile organic compounds, esters, hydrogen sulfide, sulfur oxides, ammonia, chlorine, propane, ozone, ethanol, hydrocarbons, hydrogen cyanide, combustible gases, flammable gases, toxic gases, corrosive gases, oxidizing gases, and/or reducing gases and/or any combinations thereof. Hereby, the capability to identify a wide range of hazardous gases, improving safety and diagnostic capabilities is provided.

Moreover, the gas sensor(s) **9** may be configured to continuously detect a gas or the gas sensor(s) may be configured to detect a gas within predetermined intervals. A technical benefit may include allowing for real-time monitoring or periodic checks to conserve power while maintaining safety.

Furthermore, the gas sensor(s) may be configured to detect a gradient or increase in gas content around the battery **2.** Hereby the system 1 may detect trends or sudden changes in gas emissions, which can indicate the onset of thermal runaway or an unhealthy battery **2** or one or more of its cells.

Additionally, the control unit 10 may be configured to receive detection data from the one or more gas sensors **9** so that the aggregation and analysis of data from multiple sensors **9,** enhancing diagnostic accuracy is enabled. The control unit **10,** based on the received detection data, is configured to compare the detection data with a predetermined gas content value thereby providing a benchmark for identifying abnormal gas levels, improving fault detection.

The control unit **10** may also be configured to store the received detection data over time. A technical benefit may include enabling historical analysis and trend monitoring, which can predict future battery health issues. The control unit **10** may also be configured to detect if a gradient of the detected gas or an increase of the detected gas content exceeds a predetermined level within a predetermined time period so that early warning of rapid changes in gas emissions, allowing for timely intervention, is provided.

Furthermore, the control unit **10** may be configured to initiate a warning process if the detected gas content exceeds the predetermined gas content so that immediate action is taken to prevent battery failure or safety hazards. The warning process may be issuing a warning, is forcing a stop of the battery, is stopping a charge of the battery, is stopping a discharge of the battery, is initiating a fire extinguishing system, is activating an ejector seat for the operator and/or is initiating a release of the battery from the vehicle. Hereby, different safety measures may be initiated to prevent or mitigate the effects of battery failure.

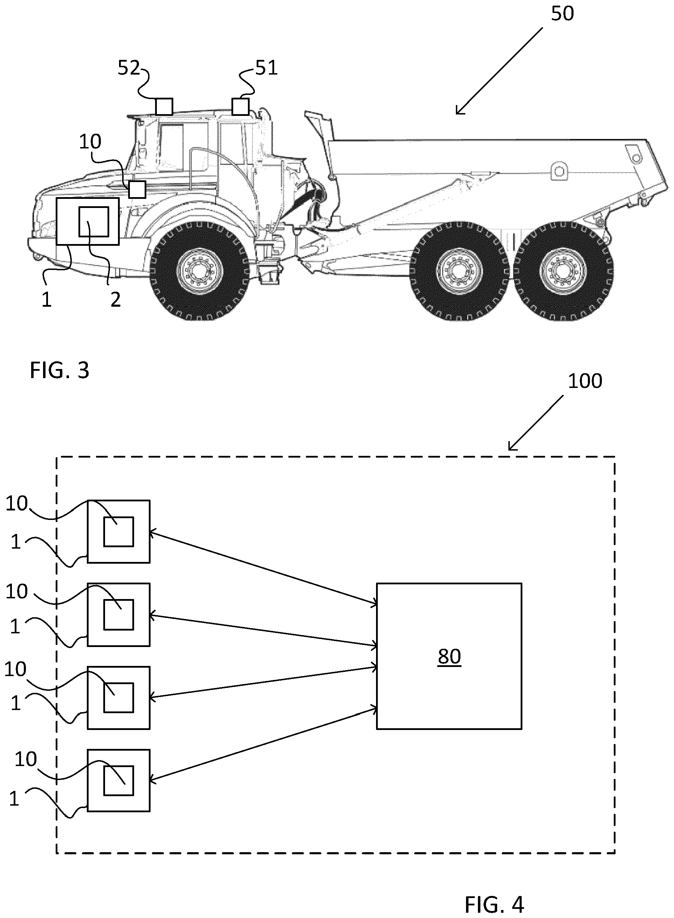

In **FIG. 3****,** a vehicle **50** is shown. The vehicle **50** comprises the battery monitoring system **1.** The control unit **10** may be operatively connected with other vehicle components, and that the control unit **10** may be configured to receive data from these components so that the control unit **10** may monitor the detected gas content in view of vehicle data received from the other vehicle components. A technical benefit may include integrating battery monitoring with overall vehicle health monitoring, enhancing the robustness of the system.

Also, the control unit **10** may be operatively connected with environmental sensors, such as temperature sensor **51,** pressure sensors **52,** as well as others, and the control unit **10** may be configured to receive data from these environmental sensors so that the control unit **10** may monitor the detected gas content in view of environmental data received from the other environmental sensors. A technical benefit may include providing a comprehensive understanding of the conditions affecting battery health, improving diagnostic accuracy.

Moreover, the control unit **10** may be configured to monitoring environmental data (temperature, pressure, etc.) and comparing these environmental data with the detected gas content for monitoring a health of the battery **2** based on the environmental data. A technical benefit may include correlating environmental factors with gas emissions, providing deeper insights into battery health. The control unit **10** may be configured to predicting the health of the battery **2** in view of use of the vehicle **50** and the environmental data monitored during a period of time. A technical benefit may include enabling predictive maintenance and extending battery life by identifying potential issues before they become critical.

The battery **2** is chargeable and/or dischargeable. A technical benefit may include flexibility in monitoring the battery **2** during various operational states, enhancing overall system reliability. The control unit **10** may be configured to monitor a change in gas content during charging/discharging for predicting the health of the battery **2.** A technical benefit may include identifying issues related to specific operational states, improving diagnostic accuracy as well as predicting the health of the battery.

The battery **2** may be a rechargeable battery, such as lithium-ion battery, a nickelcadmium battery, a nickel-metal hydride battery or any combination thereof. A technical benefit may include compatibility with various battery chemistries, enhancing the system's versatility. The battery **2** may comprise a plurality of cells **3.** A technical benefit may include enabling monitoring of large battery packs, improving safety and reliability. Also, the system may further comprise a plurality of batteries. A technical benefit may include providing comprehensive monitoring for complex battery systems, enhancing overall system robustness.

The control unit stores data of the detected gas content in combination with other vehicle data, environmental data, use situations, and wherein the control unit is configured to predict the health of the battery when comparing the detected gas content in combination with the other data. A technical benefit may include providing a holistic view of battery health, improving the accuracy of predictions and interventions.

As seen in **FIG. 4****,** the control unit **10** may be configured to exchange data with a central control unit **80.** A technical benefit may include enabling centralized monitoring and control, improving scalability and system integration. In **FIG. 4****,** a central battery health prediction system **100** is shown, the central battery health prediction system **100** may comprise the central control unit **80** connected with one or more battery monitoring systems **1.** The central control unit **80** may receive data from the different battery monitoring systems **1** regarding the gas emission from the battery during different use cases and in view of vehicle data and/or environmental data as well as geographical positions so that the central control unit **80** may predict the health of the batteries and thereby communicate this to the operator of a vehicle so that the use of the battery may be optimized during different use cases and that improved accuracy of predictions and interventions of the batteries is obtained.

The closed expansion space **8** may be hermetically connected with the second port **7** so that contamination and ensuring accurate gas detection is provided. In addition, in case of the battery is submerged in a fluid during use it is obtained that the fluid not is entering into the battery and its cells. The closed expansion space **8** may be a bellow, diaphragm or expansion chamber/vessel. A technical benefit may include providing flexible and reliable containment of gases, enhancing system durability, and that a volume of the closed expansion space **8** increases according to the volume of gasses entering into the space. Hence, the expansion space may have a volume, the volume is expandable. A technical benefit may include accommodating varying amounts of gas emissions, preventing over-pressurization. The expansion space may be arranged inside a casing. A technical benefit may include protecting the expansion space from external damage, improving system durability.

Furthermore, the ventilation valve **5** may comprise a safety valve. A technical benefit may include providing an additional layer of safety by regulating pressure and preventing over-pressurization. Also, a plurality of ventilation valves may be arranged at the housing, each ventilation valve being in fluid communication with a closed expansion space. A technical benefit may include enhancing the system's ability to manage gas emissions and pressure effectively. The ventilation valve(s) **5** may be adapted to equalize a pressure in the atmosphere **A** with the closed expansion space **8.** A technical benefit may include maintaining stable conditions within the battery housing, improving sensor accuracy. Also, the ventilation valve may continuously be equalizing the pressure to and from the atmosphere. A technical benefit may include ensuring consistent monitoring conditions, enhancing the reliability of gas detection.

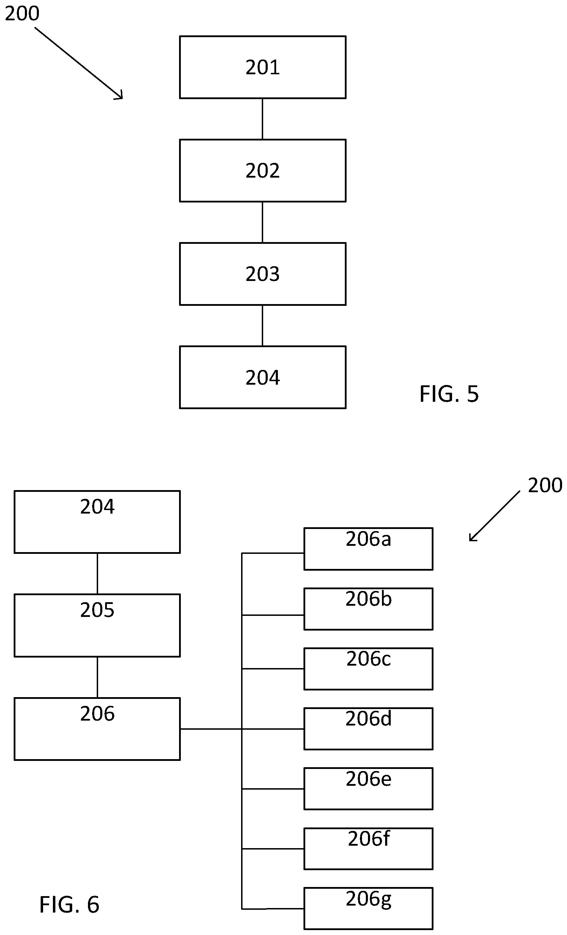

In **FIG. 5****,** a method **200** for monitoring a battery of a battery monitoring system **1** is shown. The method **200** comprises arranging **201** a battery having one or more cells in a housing, the housing has an atmosphere, arranging **202** a ventilation valve at the housing for controlling the atmosphere in the housing, the ventilation valve comprises a first port and a second port, the first port being in fluid communication with the housing, the second port is in fluid communication with a closed expansion space arranged outside the housing and arranging **203** a gas sensor at the atmosphere, at the ventilation valve, and/or at the closed expansion space. The method **200** further comprises detecting **204** a gas leaking or emitting from the battery via the gas sensor as taught herein.

The method **200** may further comprise detecting gas continuously or within predetermined intervals, and/or detecting a gradient or increase in gas content around the battery.

In addition, the method **200** may further comprise arranging a control unit, and transferring detection data from the one or more gas sensors to the control unit.

Moreover, the method **200** comprises comparing the detection data with a predetermined gas content value. The method **200** may also comprise storing the received detection data over time in the control unit.

**FIG. 6** shows a method for initiating a warning process if the detected gas content exceeds the predetermined gas content. The method **200** comprises detecting **204** the gas leaking or emitting from the battery via the gas sensor as described above. In addition, the method **200** comprises detecting **205** if a gradient of the detected gas or an increase of the detected gas content exceeds a predetermined level within a predetermined time period. Furthermore, the method **200** comprises initiating **206** a warning process if the detected gas content exceeds the predetermined gas content.

The initiating **206** of the warning process comprising one or more of the following processes
issuing **206a** a warning,
forcing **206b** a stop of the battery,
stopping **206c** a charge of the battery,
stopping **206d** a discharge of the battery,
initiating **206e** a fire extinguishing system,
activating **206f** an ejector seat for the operator, and/or
initiating **206g** a release of the battery from the vehicle.

Furthermore, the method **200** may also comprise receiving vehicle data from other vehicle components, and monitoring the detected gas content in view of vehicle data received from the other vehicle components.

Moreover, the method **200** may comprise receiving environmental data from one or more environmental sensors, and monitoring the detected gas content in view of environmental data received from the other environmental sensors.

The method **200** may also comprise comparing these environmental data with the detected gas content for monitoring a health of the battery based on the environmental data. Additional, the method **200** may comprise predicting the health of the battery **2** in view of use of the vehicle and the environmental data monitored during a period of time.

Furthermore, the method **200** may comprise monitoring a change in gas content during charging/discharging for predicting the health of the battery. The method **200** may further comprise storing data of the detected gas content in combination with other vehicle data, environmental data and/or use situations of the vehicle, and predicting the health of the battery when comparing the detected gas content in combination with the other data. The method **200** may exchanging data with a central control unit.

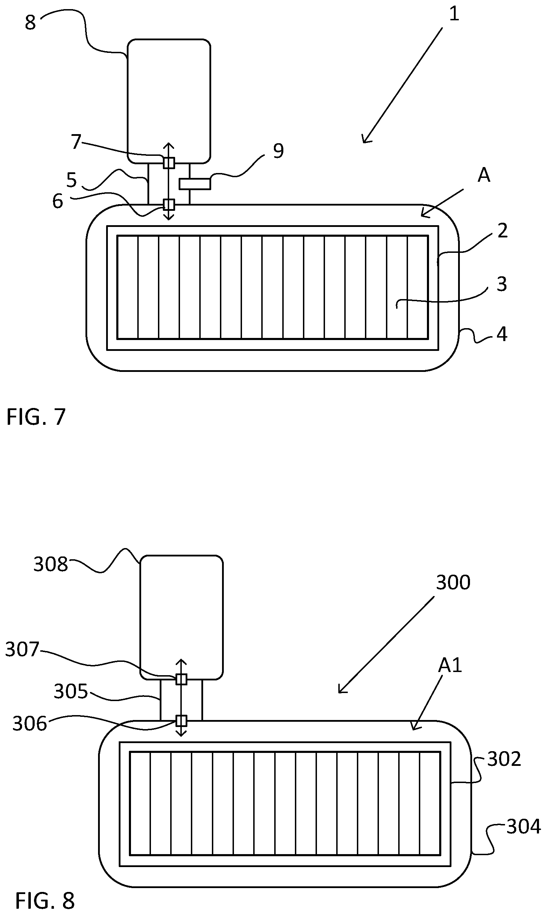

**FIG. 7** is another view of **FIG. 1****,** according to an example. **FIG. 7** shows a battery monitoring system **1** for a vehicle, comprising a battery **2** having one or more cells **3,** a housing **4** wherein the battery is arranged, the housing **4** has an atmosphere **A,** wherein a ventilation valve **5** is arranged at the housing **4** for controlling the atmosphere **A** in the housing **4,** the ventilation valve **5** comprises a first port **6** and a second port **7,** the first port **6** being in fluid communication with the housing **4,** the second port **7** is in fluid communication with a closed expansion space **8** arranged outside the housing **4,** wherein a gas sensor **9** is arranged at the atmosphere, at the ventilation valve, and/or at the closed expansion space, the gas sensor **9** is configured to detect a gas leaking or emitting from the battery **2.**

The present disclosure also relates to use of the battery monitoring system **1** as described herein for predicting a thermal run away of the battery **2.**

In addition, the present disclosure also relates to use of the battery monitoring system **1** as described herein for predicting a health of the battery **2** during different use cases of the battery.

Moreover, the present disclosure also relates to use of the battery monitoring system **1** as described herein for predicting a health of the battery **2** during charging of the battery **2.**

In **FIG. 8****,** a vehicle battery system **300** is shown. The vehicle battery system **300** comprising one or more battery(ies) **302** arranged in a housing **304,** the housing **304** having an atmosphere **Al,** a ventilation valve **305** arranged at the housing **304** for controlling the atmosphere **A1** in the housing **304,** the ventilation valve **305** comprises a first port **306** and a second port **307,** the first port **306** being in fluid communication with the housing **304,** wherein the second port **307** is in fluid communication with a closed expansion space **308** arranged outside the housing **304.** Hereby is obtained that the venting of the interior of the housing **304** is performed by equalizing the pressure between the interior and the expansion space **308.** Thereby is ensured that the battery **302** may "breathe" without the risk of water being leaked into the battery **302** if submerged.

In addition, the closed expansion space may be hermetically connected with the second port **307.** Furthermore, the closed expansion space **308** may be a bellow, diaphragm or expansion chamber/vessel. The ventilation valve **305** may comprise a safety valve.

Also, a plurality of ventilation valves may be arranged at the housing, each ventilation valve being in fluid communication with a closed expansion space.

The ventilation valve may be adapted to equalize a pressure in the atmosphere with the closed expansion space. Also, the ventilation valve continuously may be equalizing the pressure to and from the atmosphere. The expansion space may have a volume, the volume may be expandable. The expansion space may be arranged inside a casing for protecting it for rupture.

Furthermore, a vehicle may comprise the vehicle battery system **300** as described above.

Certain aspects and variants of the disclosure are set forth in the following examples numbered consecutive below.

Example 1: A battery monitoring system **(1)** for a vehicle, comprising a battery **(2)** having one or more cells **(3),**
a housing **(4)** wherein the battery is arranged, the housing has an atmosphere **(A),** wherein a ventilation valve **(5)** is arranged at the housing for controlling the atmosphere in the housing, the ventilation valve comprises a first port **(6)** and a second port **(7),** the first port being in fluid communication with the housing, the second port is in fluid communication with a closed expansion space **(8)** arranged outside the housing,
wherein a gas sensor **(9)** is arranged at the atmosphere, at the ventilation valve, and/or at the closed expansion space, the gas sensor is configured to detect a gas leaking or emitting from the battery **(2).**

Example 2: The battery monitoring system **(1)** of example 1, wherein a plurality of gas sensors **(9)** are arranged.

Example 3: The battery monitoring system **(1)** of example 2, wherein the plurality of gas sensors **(9)** is configured to detect different gasses and/or quantities of the gasses.

Example 4: The battery monitoring system **(1)** of any of the examples 1-3, wherein the gas sensor **(9)** is configured to detect any of the following gases water steam, Carbon monoxide, Carbon dioxide, Hydrogen, methane, ethane, oxygen, nitrogen oxides, volatile organic compounds, esters, hydrogen sulfide, sulfur oxides, ammonia, chlorine, propane, ozone, ethanol, hydrocarbons, hydrogen cyanide, combustible gases, flammable gases, toxic gases, corrosive gases, oxidizing gases, and/or reducing gases and/or any combinations thereof.

Example 5: The battery monitoring system **(1)** of any of the examples 1-4, wherein the gas sensor **(9)** is configured to continuously detect a gas or the gas sensor **(9)** is configured to detect a gas within predetermined intervals.

Example 6: The battery monitoring system **(1)** of any of the examples 1-5, wherein the gas sensor **(9)** is configured to detect a gradient or increase in gas content around the battery **(2).**

Example 7: The battery monitoring system **(1)** of any of the examples 1-6, further comprising a control unit **(10).**

Example 8: The battery monitoring system **(1)** of example **7,** wherein the control unit **(10)** is operatively connected with the gas sensor **(9).**

Example 9: The battery monitoring system **(1)** of example 7 and/or 8, wherein the control unit **(10)** is configured to receive detection data from the one or more gas sensors **(9).**

Example 10: The battery monitoring system **(1)** of any of the examples 7-9, wherein the control unit **(10)** based on the received detection data is configured to compare the detection data with a predetermined gas content value.

Example 11: The battery monitoring system **(1)** of example 10, wherein the control unit **(10)** is configured to store the received detection data over time.

Example 12: The battery monitoring system **(1)** of any of the examples 7-11, wherein the control unit **(10)** is configured to detect if a gradient of the detected gas or an increase of the detected gas content exceeds a predetermined level within a predetermined time period.

Example 13: The battery monitoring system **(1)** of example 11, wherein the control unit **(10)** is configured to initiate a warning process if the detected gas content exceeds the predetermined gas content.

Example 14: The battery monitoring system **(1)** of example 13, wherein the warning process is issuing a warning, is forcing a stop of the battery, is stopping a charge of the battery, is stopping a discharge of the battery, is initiating a fire extinguishing system, is activating an ejector seat for the operator and/or is initiating a release of the battery from the vehicle.

Example 15: The battery monitoring system **(1)** of any of the examples 7-14, wherein the control unit **(10)** is operatively connected with other vehicle components, and that the control unit is configured to receive data from these components so that the control unit can monitor the detected gas content in view of vehicle data received from the other vehicle components.

Example 16: The battery monitoring system **(1)** of any of the examples 7-15, wherein the control unit **(10)** is operatively connected with environmental sensors, such as temperature sensor, pressure sensors, and the control unit is configured to receive data from these environmental sensors so that the control unit can monitor the detected gas content in view of environmental data received from the other environmental sensors.

Example 17: The battery monitoring system **(1)** of example 16, wherein the control unit is configured to monitoring environmental data, such as temperature, pressure, etc., and comparing these environmental data with the detected gas content for monitoring a health of the battery **(2)** based on the environmental data.

Example 18: The battery monitoring system **(1)** of example 17, wherein the control unit **(10)** is configured to predicting the health of the battery **(2)** in view of use of the vehicle and the environmental data monitored during a period of time.

Example 19: The battery monitoring system **(1)** of any of the examples 1-19, wherein the battery **(2)** is chargeable and/or dischargeable.

Example 20: The battery monitoring system **(1)** of example 19, wherein the control unit **(10)** is configured to monitor a change in gas content during charging/discharging for predicting the health of the battery.

Example 21: The battery monitoring system **(1)** of any of the examples 7-20, wherein the control unit **(10)** stores data of the detected gas content in combination with other vehicle data, environmental data, use situations, and wherein the control unit **(10)** is configured to predict the health of the battery **(2)** when comparing the detected gas content in combination with the other data.

Example 22: The battery monitoring system **(1)** of any of the examples 7-21, wherein the control unit **(10)** is configured to exchange data with a central control unit (80).

Example 23: The battery monitoring system **(1)** of any of the examples 1-22, wherein the closed expansion space **(8)** is hermetically connected with the second port.

Example 24: The battery monitoring system **(1)** of example 23, wherein the closed expansion space **(8)** is a bellow, diaphragm or expansion chamber/vessel.

Example 25: The battery monitoring system **(1)** of any of the examples 1-24, wherein the ventilation valve **(5)** comprises a safety valve.

Example 26: The battery monitoring system **(1)** of any of the examples 1-25, further comprises a plurality of ventilation valves arranged at the housing, each ventilation valve being in fluid communication with a closed expansion space.

Example 27: The battery monitoring system **(1)** of any of the examples 1-26, wherein the ventilation valve **(5)** is adapted to equalize a pressure in the atmosphere with the closed expansion space.

Example 28: The battery monitoring system **(1)** of example 27, wherein the ventilation valve **(5)** continuously is equalizing the pressure to and from the atmosphere.

Example 29: The battery monitoring system **(1)** of any of the claims 1-28, wherein the expansion space **(8)** has a volume, the volume is expandable.

Example 30: The battery monitoring system **(1)** of any of the claims 1-29, wherein the expansion space is arranged inside a casing.

Example 31: The battery monitoring system **(1)** of any of the examples 1-30, wherein the battery **(2)** is a rechargeable battery, such as lithium-ion battery, a nickelcadmium battery, a nickel-metal hydride battery or any combination thereof.

Example 32: The battery monitoring system **(1)** of example 31, wherein the battery **(2)** comprises a plurality of cells **(3).**

Example 33: The battery monitoring system **(1)** of any of the examples 1-32, further comprises a plurality of batteries **(2).**

Example 34: A central battery health prediction system **(100)** comprising a central control unit **(80)** connected with one or more battery monitoring systems **(1)** of any of the examples 1-33.

Example 35: A vehicle **(50)** comprising the battery monitoring system **(1)** of any of the examples 1-33.

Example 36: A method **(200)** for monitoring a battery of a battery monitoring system **(1)** of any of the examples 1-33, comprising
arranging **(201)** a battery having one or more cells in a housing, the housing has an atmosphere,
arranging **(202)** a ventilation valve at the housing for controlling the atmosphere in the housing, the ventilation valve comprises a first port and a second port, the first port being in fluid communication with the housing, the second port is in fluid communication with a closed expansion space arranged outside the housing,
arranging **(203)** a gas sensor at the atmosphere, at the ventilation valve, and/or at the closed expansion space,
detecting **(204)** a gas leaking or emitting from the battery via the gas sensor.

Example 37: The method **(200)** of example 36, further comprising detecting gas continuously or within predetermined intervals.

Example 38: The method **(200)** of example 36 and/or 37, further comprising detecting a gradient or increase in gas content around the battery.

Example 39: The method **(200)** of any of the examples 36-38, further comprising arranging a control unit **(10),**
transferring detection data from the one or more gas sensors to the control unit.

Example 40: The method **(200)** of any of the examples 36-39, further comprising comparing the detection data with a predetermined gas content value.

Example 41: The method **(200)** of any of the examples 36-40, further comprising storing the received detection data over time in the control unit.

Example 42: The method **(200)** of any of the examples 36-41, further comprising detecting if a gradient of the detected gas or an increase of the detected gas content exceeds a predetermined level within a predetermined time period.

Example 43: The method **(200)** of example 42, further comprising initiating a warning process if the detected gas content exceeds the predetermined gas content.

Example 44: The method **(200)** of example 43, whereby the warning process comprising one or more of the following processes
issuing a warning,
forcing a stop of the battery,
stopping a charge of the battery,
stopping a discharge of the battery,
initiating a fire extinguishing system,
activating an ejector seat for the operator, and/or
initiating a release of the battery from the vehicle.

Example 45: The method of any of the examples 36-44, further comprising receiving vehicle data from other vehicle components,
monitoring the detected gas content in view of vehicle data received from the other vehicle components.

Example 46: The method of any of the examples 36-45, further comprising receiving environmental data from one or more environmental sensors,
monitoring the detected gas content in view of environmental data received from the other environmental sensors.

Example 47: The method of example 46, further comprising comparing these environmental data with the detected gas content for monitoring a health of the battery based on the environmental data.

Example 48: The method of example 47, further comprising predicting the health of the battery in view of use of the vehicle and the environmental data monitored during a period of time.

Example 49: The method of any of the examples 36-49, further comprising monitoring a change in gas content during charging/discharging for predicting the health of the battery.

Example 50: The method of any of the examples 36-49, further comprising
storing data of the detected gas content in combination with other vehicle data, environmental data and/or use situations of the vehicle,
predicting the health of the battery when comparing the detected gas content in combination with the other data.

Example 51: The method of any of the examples 36-50, further comprising exchanging data with a central control unit **(80).**

Example 52: Use of the battery monitoring system **(1)** of any of the examples 1-33 for predicting a thermal run away of the battery **(2).**

Example 53: Use of the battery monitoring system **(1)** of any of the examples 1-33 for predicting a health of the battery during different use cases of the battery **(2).**

Example 54: Use of the battery monitoring system **(1)** of any of the examples 1-33 for predicting a health of the battery during charging of the battery **(2).**

Example 55: A vehicle battery system **(300)** comprising one or more battery(ies) **(302)** arranged in a housing **(304),** the housing having an atmosphere **(A1),** a ventilation valve **(305)** arranged at the housing for controlling the atmosphere in the housing, the ventilation valve comprises a first port **(306)** and a second port **(307),** the first port being in fluid communication with the housing, wherein the second port is in fluid communication with a closed expansion space **(308)** arranged outside the housing.

Example 56: The vehicle battery system **(300)** of example 56, wherein the closed expansion space is hermetically connected with the second port.

Example 57: The vehicle battery system **(300)** of example 55 and/or 56, wherein the closed expansion space is a bellow, diaphragm or expansion chamber/vessel.

Example 58: The vehicle battery system **(300)** of any of the examples 55-57, wherein the ventilation valve comprises a safety valve.

Example 59: The vehicle battery system **(300)** of any of the examples 55-58, further comprises a plurality of ventilation valves arranged at the housing, each ventilation valve being in fluid communication with a closed expansion space.

Example 60: The vehicle battery system **(300)** of any of the examples 55-59, wherein the ventilation valve is adapted to equalize a pressure in the atmosphere with the closed expansion space.

Example 61: The vehicle battery system **(300)** of any of the examples 55-60, wherein the ventilation valve continuously is equalizing the pressure to and from the atmosphere.

Example 62: The vehicle battery system **(300)** of any of the examples 55-61, wherein the expansion space has a volume, the volume is expandable.

Example 63: The vehicle battery system **(300)** of any of the examples 55-62, wherein the expansion space is arranged inside a casing.

Example 64: A vehicle comprising the vehicle battery system **(300)** of any of the examples 55-63.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery monitoring system **(1)** for a vehicle, comprising
a battery **(2)** having one or more cells **(3),**
a housing **(4)** wherein the battery **(2)** is arranged, the housing has an atmosphere **(A),** wherein a ventilation valve **(5)** is arranged at the housing **(4)** for controlling the atmosphere in the housing, the ventilation valve **(5)** comprises a first port **(6)** and a second port **(7),** the first port being in fluid communication with the housing, the second port is in fluid communication with a closed expansion space **(8)** arranged outside the housing **(4),**
wherein a gas sensor **(9)** is arranged at the atmosphere **(A),** at the ventilation valve **(5),** and/or at the closed expansion space **(8),** the gas sensor (b) is configured to detect a gas leaking or emitting from the battery **(2).**

2. The battery monitoring system **(1)** of claim 1, wherein a plurality of gas sensors **(9)** are arranged.

3. The battery monitoring system **(1)** of claim 2, wherein the plurality of gas sensors **(9)** is configured to detect different gasses and/or quantities of the gasses.

4. The battery monitoring system **(1)** of any of the claims 1-3, wherein the gas sensor **(9)** is configured to continuously detect a gas or the gas sensor **(9)** is configured to detect a gas within predetermined intervals.

5. The battery monitoring system **(1)** of any of the claims 1-4, wherein the gas sensor **(9)** is configured to detect a gradient or increase in gas content around the battery **(2).**

6. The battery monitoring system **(1)** of any of the claims 1-5, further comprising a control unit **(10).**

7. The battery monitoring system **(1)** of claim 6, wherein the control unit **(10)** is operatively connected with the gas sensor **(9).**

8. The battery monitoring system **(1)** of claim 6 and/or 7, wherein the control unit **(10)** is configured to receive detection data from the one or more gas sensors **(9).**

9. The battery monitoring system **(1)** of any of the claims 6-8, wherein the control unit **(10)** based on the received detection data is configured to compare the detection data with a predetermined gas content value.

10. The battery monitoring system **(1)** of any of the claims 6-9, wherein the control unit **(10)** is configured to detect if a gradient of the detected gas or an increase of the detected gas content exceeds a predetermined level within a predetermined time period.

11. The battery monitoring system **(1)** of claim 10, wherein the control unit **(10)** is configured to initiate a warning process if the detected gas content exceeds the predetermined gas content.

12. The battery monitoring system **(1)** of any of the claims 6-11, wherein the control unit **(10)** is operatively connected with other vehicle components, and that the control unit **(10)** is configured to receive data from these components so that the control unit can monitor the detected gas content in view of vehicle data received from the other vehicle components.

13. A central battery health prediction system **(100)** comprising a central control unit **(80)** connected with one or more battery monitoring systems **(1)** of any of the claims 1-12.

14. A vehicle **(50)** comprising the battery monitoring system **(1)** of any of the claims 1-12.

15. A method **(200)** for monitoring a battery **(2)** of a battery monitoring system **(1)** of any of the claims 1-12, comprising
arranging **(201)** a battery **(2)** having one or more cells **(3)** in a housing **(4),** the housing has an atmosphere (b),
arranging **(202)** a ventilation valve **(5)** at the housing for controlling the atmosphere in the housing, the ventilation valve comprises a first port **(6)** and a second port **(7),** the first port being in fluid communication with the housing, the second port is in fluid communication with a closed expansion space **(8)** arranged outside the housing,
arranging **(203)** a gas sensor **(9)** at the atmosphere, at the ventilation valve, and/or at the closed expansion space,
detecting **(204)** a gas leaking or emitting from the battery via the gas sensor **(9).**
